(19) Europäisches Patentamt
European Patent Office
Office européen des brevets

(11) **EP 1 000 476 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(21) Anmeldenummer: **98947309.5**

(22) Anmeldetag: **20.07.1998**

(51) Int Cl.⁷: **H04J 13/02**

(86) Internationale Anmeldenummer:
**PCT/DE98/02026**

(87) Internationale Veröffentlichungsnummer:
**WO 99/007084 (11.02.1999 Gazette 1999/06)**

(54) **VERFAHREN UND FUNKSTATION ZUR DATENÜBERTRAGUNG**

METHOD AND RADIO STATION FOR TRANSMITTING DATA

PROCEDE ET STATION RADIO POUR LA TRANSMISSION DE DONNEES

(84) Benannte Vertragsstaaten:
**DE FR GB**

(30) Priorität: **31.07.1997 DE 19733120**

(43) Veröffentlichungstag der Anmeldung:
**17.05.2000 Patentblatt 2000/20**

(73) Patentinhaber: **SIEMENS AKTIENGESELLSCHAFT**
**80333 München (DE)**

(72) Erfinder:
• **BAHRENBURG, Stefan**
  **D-81477 München (DE)**
• **EUSCHER, Christoph**
  **D-46414 Rhede (DE)**
• **WEBER, Tobias**
  **D-67731 Otterbach (DE)**
• **BAIER, Paul, Walter**
  **D-67661 Kaiserslautern (DE)**
• **MAYER, Jürgen**
  **D-67105 Schifferstadt (DE)**
• **SCHLEE, Johannes**
  **D-67657 Kaiserslautern (DE)**

(56) Entgegenhaltungen:
• **JUNG P ET AL: "A JOINT DETECTION CDMA MOBILE RADIO SYSTEM CONCEPT DEVELOPED WITHIN COST 231" PROCEEDINGS OF THE VEHICULAR TECHNOLOGY CONFERENCE, CHICAGO, JULY 25 - 28, 1995, Bd. 1, Nr. CONF. 45, 25. Juli 1995, Seiten 469-473, XP000550217 INSTITUTE OF ELECTRICAL AND ELECTRONICS ENGINEERS**

**Beschreibung**

Die Erfindung betrifft ein Verfahren und eine Funkstation zur Datenübertragung über eine Funkschnittstelle in einem Funk-Kommunikationssystem, insbesondere einem Mobilfunknetz.

In Funk-Kommunikationssystemen werden Nachrichten (beispielsweise Sprache, Bildinformation oder andere Daten) mit Hilfe von elektromagnetischen Wellen übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900 MHz. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Die abgestrahlten elektromagnetischen Wellen werden aufgrund von Verlusten durch Reflektion, Beugung und Abstrahlung infolge der Erdkrümmung und dergleichen gedämpft. Infolgedessen sinkt die Empfangsleistung, die bei der empfangenden Funkstation zur Verfügung steht. Diese Dämpfung ist ortsabhängig und bei sich bewegenden Funkstationen auch zeitabhängig.

Zwischen einer sendenden und einer empfangenden Funkstation besteht eine Funkschnittstelle, über die mit Hilfe der elektromagnetischen Wellen eine Datenübertragung stattfindet. Aus DE 195 49 148 ist ein Funk-Kommunikationssystem bekannt, das eine CDMA-Teilnehmerseparierung (CDMA Code Division Multiple Access) nutzt, wobei die Funkschnittstelle zusätzlich eine Zeitmultiplex-Teilnehmerseparierung (TDMA Time Division Multiple Access) aufweist. Empfangsseitig wird ein JD-Verfahren (Joint Detection) angewendet, um unter Kenntnis von Spreizcodes mehrerer Teilnehmer eine verbesserte Detektion der übertragenen Daten vorzunehmen. Dabei ist es bekannt, daß einer Verbindung über die Funkschnittstelle zumindest zwei Datenkanäle zugeteilt werden können, wobei jeder Datenkanal durch einen individuellen Spreizcode unterscheidbar ist.

Es ist aus dem GSM-Mobilfunknetz bekannt, daß übertragene Daten als Funkblöcke (Burst) übertragen werden, wobei innerhalb eines Funkblockes Mittambeln mit bekannten Symbolen übertragen werden. Diese Mittambeln können im Sinne von Trainingssequenzen zum empfangsseitigen Abstimmen der Funkstation genutzt werden. Die empfangende Funkstation führt anhand der Mittambeln eine Schätzung der Kanalimpulsantworten für verschiedene Übertragungskanäle durch.

Für solche Funk-Kommunikationssysteme stellt die Anzahl der gemeinsam schätzbaren Kanalimpulsantworten einen kapazitätsbegrenzenden Faktor dar. Da die Anzahl der Symbole der Mittambel endlich ist und eine Kanalimpulsantwort nicht unendlich kurz sein kann, ist die Zahl der gemeinsam schätzbaren Kanalimpulsantworten begrenzt und somit auch die Anzahl der gemeinsam über die Funkschnittstelle übertragenen Datenkanäle.

Der Erfindung liegt somit die Aufgabe zugrunde, ein Verfahren und eine Funkstation zur Datenübertragung in einem Funk-Kommunikationssystem anzugeben, die die Kapazitätsauslastung des Funk-Kommunikationssystems verbessern. Diese Aufgabe wird durch das Verfahren mit den Merkmalen des Patentanspruchs 1 und die Funkstation mit den Merkmalen des Patentanspruches 11 gelöst. Vorteilhafte Weiterentwicklungen sind den Unteransprüchen zu entnehmen.

In einem Funk-Kommunikationssystem werden erfindungsgemäß beim Verfahren zur Datenübertragung über eine Funkschnittstelle einer Verbindung zumindest zwei Datenkanäle zugeteilt, wobei jeder Datenkanal durch einen individuellen Spreizcode unterscheidbar ist. In einem Datenkanal werden zusätzlich zu Datensymbolen Mittambeln mit bekannten Symbolen übertragen, wobei für die Verbindung eine Anzahl Mittambeln verwendet wird, die kleiner als die Anzahl von Datenkanälen für diese Verbindung ist.

Damit ist die Anzahl von Mittambeln nicht mehr starr an die Anzahl von Datenkanälen geknüpft, wodurch der kapazitätsbegrenzende Faktor nunmehr nur auf die Anzahl von Verbindungen jedoch nicht auf die Anzahl von Datenkanälen wirkt. Damit kann die Kapazität des Funk-Kommunikationssystems besser ausgenutzt werden. Hierbei wird ausgenutzt, daß ein Übertragungskanal zwischen sendender und empfangender Funkstation für eine Verbindung, d. h. für alle Datenkanäle dieser Verbindung, gleich ist. Mithin muß eine Schätzung der Kanalimpulsantwort, d.h. eine Kanalschätzung, nicht für jeden Datenkanal einzeln durchgeführt werden.

Gemäß einer vorteilhaften Weiterbildung der Erfindung, wird für eine Verbindung nur eine Mittambel verwendet. Damit wird pro Verbindung nur eine Kanalschätzung durchgeführt, wodurch der kapazitätssteigernde Effekt maximal ausgenutzt wird.

Gemäß einer weiteren vorteilhaften Ausgestaltung der Erfindung werden die Datensymbole der zumindest zwei Datenkanäle einer Verbindung bereits beim Sender überlagert. Dies bedeutet, daß im Sender die Mittambel für alle Datenkanäle einmal erzeugt wird und die Datensymbole der Datenkanäle vor einem Senden mittels hochfrequenter Wellen, vorteilhafterweise als digitale Signale, aufaddiert werden. Damit entfällt ein erheblicher Aufwand, der sonst nötig wäre um die Signale der verschiedenen Datenkanäle parallel zu verarbeiten und abzustrahlen.

Vorteilhafterweise werden die Datensymbole mit gleicher Wichtung überlagert. Dadurch werden alle Datenkanäle einer Verbindung oder der gesamten Funkschnittstelle und deren Datensymbole gleich behandelt. Nach einer weiteren vorteilhaften Ausgestaltung werden Datensymbole einer ersten Kategorie mit einer höheren Wichtung als Datensymbole einer zweiten Kategorie überlagert. Durch diese höhere Wichtung werden die Datensymbole der ersten Kategorie mit einer höheren Signalenergie pro Datensymbol abgestrahlt und so beim Empfänger besser empfangen, d.h. auch mit größerer Genauigkeit detektierbar sein. Die Datensymbole der ersten Kategorie könnten z.B. Signalisierungsinformationen sein, die gegenüber Sprachinformationen besser zu schützen sind.

Bei der Wichtung der Datensymbole unterschiedlicher Verbindungen wird vorteilhafterweise die nötige Signalenergie pro Verbindung berücksichtigt. So benötigen Mobilstationen, die sich in der Nähe der Basisstation befinden, eine geringere Signalenergie als die Verbindungen zu den übrigen Mobilstationen. Eine solche Wichtung der Datensymbole verringert Interferenzen für benachbarte Funkzellen.

Es liegt weiterhin im Rahmen der Erfindung, daß das Verhältnis der mittleren Leistung pro Symbol zwischen Mittambel und den Datensymbolen einstellbar ist. Erfolgt die Einstellung so, daß eine gleiche mittlere Leistung für die Mittambel und einen Datenteil bestehend aus den Datensymbolen benutzt wird, ist das Sendesignal für eine Verbindung keinen Leistungsschwankungen unterworfen. Die Einstellung kann auch derart erfolgen, daß die Datensymbole der Datenkanäle eine höhere mittlere Leistung pro Symbole aufweisen und damit die Datensymbole besser detektiert werden können.

Weiterhin ist es vorteilhaft, empfangsseitig eine Auswertung der Mittambel zur Kanalschätzung durchzuführen, wobei die Länge einer geschätzten Impulsantwort einstellbar ist. Wird nur eine kurze Kanalimpulsantwort geschätzt, so können gleichzeitig eine größere Anzahl von Kanalimpulsantworten, d.h. eine größere Anzahl von Verbindungen über die Funkschnittstelle übertragen werden. Andererseits können die konkreten Geländebedingungen (beispielsweise benötigen Fjorde oder Hochgebirge durch stark gestreute Signallaufzeiten lange Kanalimpulsantworten) durch die Einstellung längerer oder kürzerer Kanalimpulsantworten besser berücksichtigt werden.

Nach einer weiteren vorteilhaften Ausgestaltung der Erfindung wird empfangsseitig eine Auswertung der Mittambel zur Kanalschätzung durchgeführt, wobei die Länge der Mittambel einstellbar ist. Bei einfachen Geländebedingungen sind nur kurze Kanalimpulsantworten zu schätzen, wodurch die Datenteile entsprechend verlängert werden können. Damit wird die übertragbare Datenrate vergrößert. Herrschen besonders schwierige Kanalbedingungen, so kann die Länge der Mittambel auf Kosten der Datenrate vergrößert werden. Dabei ist es auch möglich, daß die Datenkanäle unterschiedliche Datenraten aufweisen. Es ist also nicht notwendig, daß über die Funkschnittstelle nur Datenkanäle einer einzigen Datenrate übertragen werden. Es ergibt sich eine große Flexibilität bei der Gestaltung der Funkschnittstelle.

Eine weitere vorteilhafte Ausprägung besteht darin, daß die Funkschnittstelle zusätzlich eine TDMA-Komponente enthält, so daß in einem Zeitschlitz ein endlicher Funkblock bestehend aus Mittambeln und Datensymbolen übertragen wird. Eine Zuteilungsstrategie für die Verbindungen zu einem Zeitschlitz orientiert sich an der Anzahl der zu schätzenden Mittambeln pro Zeitschlitz. Damit wird die Kapazität der funktechnischen Ressourcen der Funkschnittstelle besser ausgenutzt, da nicht die Anzahl der Datenkanäle pro Zeitschlitz, sondern die Anzahl der zu schätzenden Mittambeln, d.h. die Anzahl der Verbindungen, pro Zeitschlitz maximiert wird.

Ausführungsbeispiele der Erfindung werden anhand der beiliegenden Zeichnungen näher erläutert.

Dabei zeigen

FIG 1    ein Blockschaltbild eines Mobilfunknetzes,

FIG 2    eine schematische Darstellung der Rahmenstruktur der Funkschnittstelle,

FIG 3    eine schematische Darstellung des Aufbaus eines Funkblocks,

FIG 4    ein Blockschaltbild vom Empfänger einer Funkstation,

FIG 5    ein Blockschaltbild vom Sender einer Funkstation,

FIG 6    eine schematische Darstellung für eine Zuteilungsstrategie von Verbindungen zu Zeitschlitzen, und

FIG 7    eine schematische Darstellung von verschiedenen Funkblöcken.

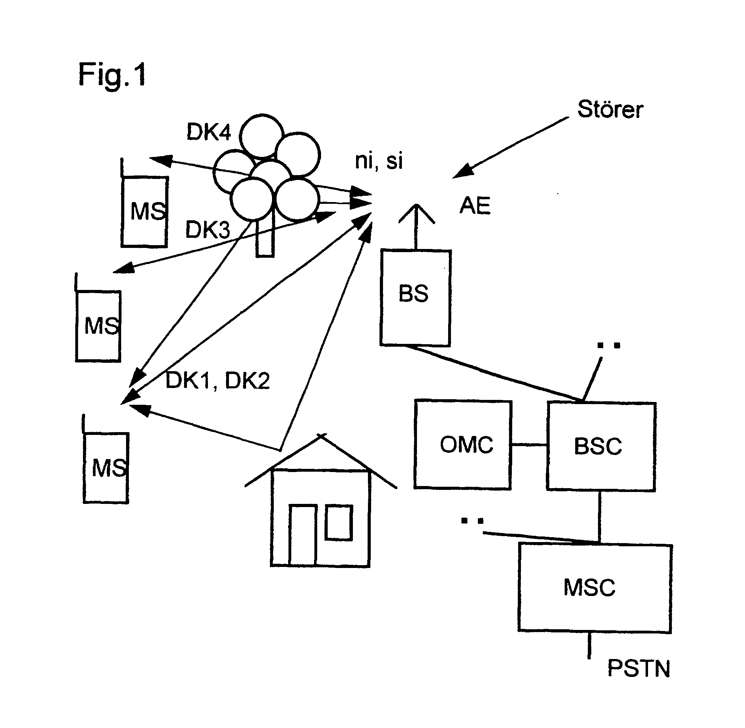

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Funkverbindung zu Mobilstationen MS aufbauen kann.

In FIG 1 sind beispielhaft drei Funkverbindungen zur Übertragung von Nutzinformationen ni und Signalisierungsinformationen si zwischen drei Mobilstationen MS und einer Basisstation BS dargestellt, wobei einer Mobilstation MS zwei Datenkanäle DK1 und DK2 und den anderen Mobilstationen MS jeweils ein Datenkanal DK3 bzw. DK4 zugeteilt sind. Ein Operations- und Wartungszentrum OMC realisiert Kontroll- und Wartungsfunktionen für das Mobilfunknetz bzw. für Teile davon. Die Funktionalität dieser Struktur wird vom Funk-Kommunmikationssystem nach der Erfindung genutzt; sie ist jedoch auch auf andere Funk-Kommunikationssysteme übertragbar, in denen die Erfindung zum Einsatz kommen kann.

Die Basisstation BS ist mit einer Antenneneinrichtung verbunden, die z.B. aus drei Einzelstrahlern besteht. Jeder der Einzelstrahler strahlt gerichtet in einen Sektor der durch die Basisstation BS versorgten Funkzelle. Es können jedoch alternativ auch eine größere Anzahl von Einzelstahlern (gemäß adaptiver Antennen) eingesetzt werden, so daß auch eine räumliche Teilnehmerseparierung nach einem SDMA-Verfahren (space division multiple access) eingesetzt werden kann.

Die Basisstation BS stellt den Mobilstationen MS Organisationsinformationen über den Aufenthaltsbereich (LA location area) und über die Funkzelle (Funkzellenkennzeichen) zur Verfügung. Die Organisationsinformationen werden gleichzeitig über alle Einzelstahler der Antenneneinrichtung abgestrahlt.

Die Verbindungen mit den Nutzinformationen ni und Signalisierungsinformationen si zwischen der Basisstation BS und den Mobilstationen MS unterliegen einer Mehrwegeausbreitung, die durch Reflektionen beispielsweise an Gebäuden zusätzlich zum direkten Ausbreitungsweg hervorgerufen werden. Durch eine gerichtete Abstahlung durch bestimmte Einzelstrahler der Antenneneinrichtung AE ergibt sich im Vergleich zur omnidirektionalen Abstahlung ein größerer Antennengewinn. Die Qualität der Verbindungen wird durch die gerichtete Abstrahlung verbessert.

Geht man von einer Bewegung der Mobilstationen MS aus, dann führt die Mehrwegeausbreitung zusammen mit weiteren Störungen dazu, daß bei der empfangenden Mobilstation MS sich die Signalkomponenten der verschiedenen Ausbreitungswege eines Teilnehmersignals zeitabhängig überlagern. Weiterhin wird davon ausgegangen, daß sich die Teilnehmersignale verschiedener Basisstationen BS am Empfangsort zu einem Empfangssignal rx in einem Frequenzkanal überlagern. Aufgabe einer empfangenden Mobilstation MS ist es, in den Teilnehmersignalen übertragene Daten d der Nutzinformationen ni, Signalisierungsinformationen si und Daten der Organisationsinformationen zu detektieren.

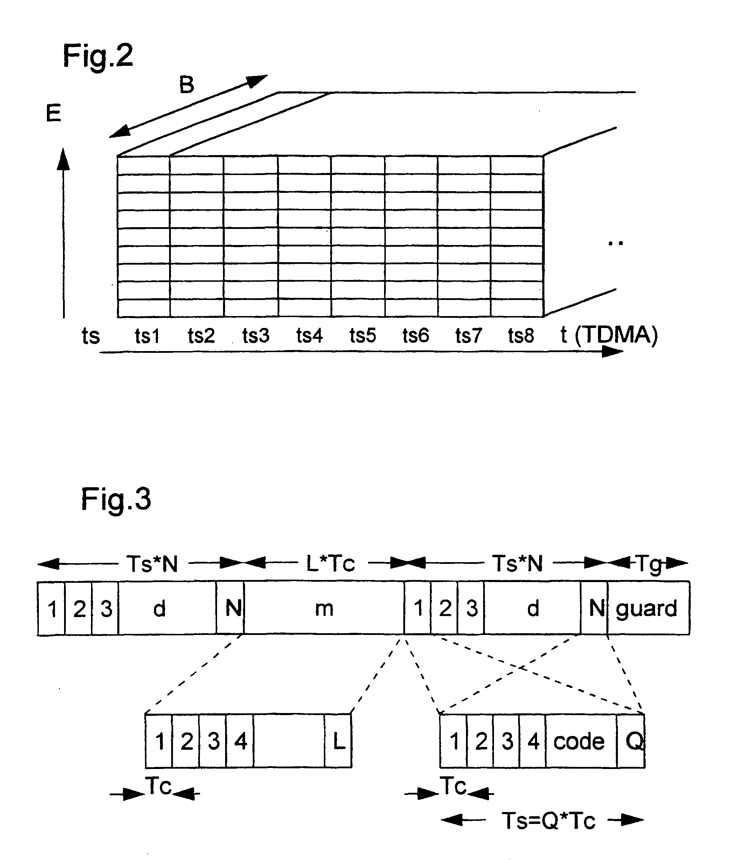

Die Rahmenstruktur der Funkschnittstelle ist aus FIG 2 ersichtlich. Gemäß einer TDMA-Komponente ist eine Aufteilung eines breitbandigen Frequenzbereiches, beispielsweise der Bandbreite B = 1,6 MHz, in mehrere Zeitschlitze ts, beispielsweise 8 Zeitschlitze ts1 bis ts8 vorgesehen. Jeder Zeitschlitz ts innerhalb des Frequenzbereiches B bildet einen Frequenzkanal. Innerhalb der Frequenzkanäle, die zur Nutzdatenübertragung vorgesehen sind, werden Informationen mehrerer Verbindungen in Funkblöcken übertragen. Gemäß einer FDMA (Frequency Division Multiple Access)-Komponente sind dem Funk-Kommunikationssystem mehrere Frequenzbereiche B zugeordnet.

Gemäß FIG 3 bestehen diese Funkblöcke zur Nutzdatenübertragung aus Datenteilen mit Datensymbolen d, in denen Abschnitte mit empfangsseitig bekannten Mittambeln m eingebettet sind. Die Daten d sind verbindungsindividuell mit einer Feinstruktur, einem Speizcode, gespreizt, so daß empfangsseitig beispielsweise K Datenkanäle DK1, DK2, DK3,.. DKK durch diese CDMA-Komponente separierbar sind. Jeden dieser Datenkanäle DK1, DK2, DK3,.. DKK wird sendeseitig pro Symbol eine bestimmte Energie E zugeordnet.

Die Spreizung von einzelnen Symbolen der Daten d mit Q Chips bewirkt, daß innerhalb der Symboldauer Ts Q Subabschnitte der Dauer Tc übertragen werden. Die Q Chips bilden dabei den individuellen Spreizkode. Die Mittambel m besteht aus L Chips, ebenfalls der Dauer Tc. Weiterhin ist innerhalb des Zeitschlitzes ts eine Schutzzeit guard der Dauer Tg zur Kompensation unterschiedlicher Signalaufzeiten der Verbindungen aufeinanderfolgender Zeitschlitze ts vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen zusammengefaßt, wobei ein bestimmter Zeitschlitz des Rahmens einen Frequenzkanal zur Nutzdatenübertragung bildet und wiederkehrend von einer Gruppe von Verbindungen genutzt wird. Weitere Frequenzkanäle, beispielsweise zur Frequenzoder Zeitsynchronisation der Mobilstationen MS werden nicht in jedem Rahmen, jedoch zu einem vorgegebenen Zeitpunkten innerhalb eines Multirahmens eingeführt. Die Abstände zwischen diesen Frequenzkanälen bestimmen die Kapazität, die das Funk-Kommunikationssystem dafür zur Verfügung stellt.

Die Parameter der Funkschnittstelle sind z.B. wie folgt:

| Dauer eines Funkblocks | 577 µs |
| --- | --- |
| Anzahl Chips pro Mittambel m | 243 |
| Schutzzeit Tg | 32 µs |
| Datensymbole pro Datenteil N | 33 |
| Symboldauer Ts | 6,46 µs |
| Chips pro Symbol Q | 14 |

(fortgesetzt)

| Chipdauer Tc | 6 / 13 µs |
|---|---|

In Aufwärts- (MS -> BS) und Abwärtsrichtung (BS -> MS) können die Parameter auch unterschiedlich eingestellt werden.

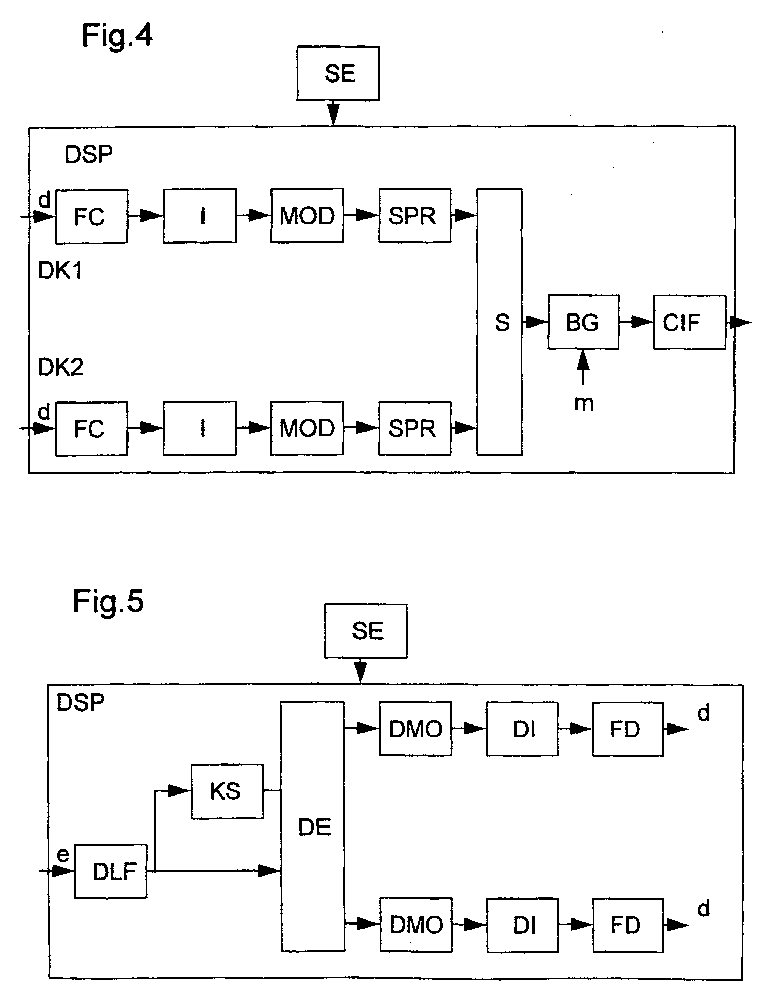

Die Sende- bzw. Empfänger nach FIG 4 bzw. FIG 5 beziehen sich auf Funkstationen, die sowohl eine Basisstation BS oder eine Mobilstation MS sein können. Es wird jedoch nur die Signalverarbeitung für eine Verbindung gezeigt.

Der Sender nach FIG 4 nimmt die zuvor digitalisierten Datensymbole d einer Datenquelle (Mikrofon oder netzseitige Verbindung) auf, wobei die beiden Datenteile mit je N=33 Datensymbolen d getrennt verarbeitet werden. Es findet zuerst eine Kanalcodierung der Rate 1/2 und constraint length 5 im Faltungscodierer FC statt, worauf sich eine Verwürfelung im Interleaver I mit einer Verwürfelungstiefe von 4 oder 16 anschließt.

Die verwürfelten Daten werden anschließend in einem Modulator MOD 4-PSK moduliert, in 4-PSK Symbole umgewandelt und daraufhin in Spreizmitteln SPR entsprechend individueller Spreizcodes gespreizt. Diese Verarbeitung wird in einem Datenverarbeitungsmittel DSP parallel für alle Datenkanäle DK1, DK2 einer Verbindung durchgeführt. Nicht dargestellt ist, daß im Fall einer Basisstation BS die übrigen Verbindungen ebenfalls parallel verarbeitet werden. Das Datenverarbeitungsmittel DSP kann durch einen digitalen Signalprozessor, der durch eine Steuereinrichtung SE gesteuert wird, durchgeführt werden.

In einem Summierglied S werden die gespreizten Daten der Datenkanäle DK1 und DK2 überlagert, wobei bei dieser Überlagerung die Datenkanäle DK1 und DK2 eine gleiche Wichtung erfahren. Die zeitdiskrete Darstellung des Sendesignals s für den m-ten Teilnehmer kann nach folgender Gleichung erfolgen:

$$s_{q+(n-1)Q}^{(m)} = \sum_{k=1}^{K(m)} d_n^{(k,m)} c_q^{(k,m)} \text{, mit} \qquad q = 1..Q, n = 1..N$$

Wobei K(m) die Nummer der Datenkanäle des m-ten Teilnehmers und N die Anzahl der Datensymbole d pro Datenteil ist. Das überlagerte Teilnehmersignal wird einem Funkblockbildner BG zugeführt, der unter der Berücksichtigung der verbindungsindivuellen Mittambel m den Funkblock zusammenstellt.

Da komplexe CDMA-Codes verwendet werden, die von binären CDMA-Codes durch eine Multiplikation mit $j^{q-1}$ abgeleitet werden, ist das Ausgangssignal eines Chipimpulsfilters CIF, das sich an den Funkblockbildner BG anschließt GMSK moduliert und hat eine in etwa konstante Einhüllende falls die Verbindung nur einen Datenkanal nutzt. Das Chipimpulsfilter CIF führt eine Faltung mit einem GMSK-Hauptimpuls durch.

Anschließend an die digitale Signalverarbeitung wird sendeseitig eine Digital/Analog-Wandlung, eine Übertragung ins Sendefrequenzband und eine Verstärkung des Signals durchgeführt. Daraufhin wird das Sendesignal über die Antenneneinrichtung abgestrahlt und erreicht ggf. über verschiedene Übertragungskanäle die empfangende Funkstation, beispielsweise eine Mobilstation MS.

Pro Verbindung wird dabei eine individuelle Mittambel m bestehend aus L komplexen Chips genutzt. Die notwendigen M unterschiedlichen Mittambeln werden von einem Grundmittambelcode der Länge M * W abgeleitet, wobei M die maximale Anzahl von Teilnehmern (Verbindungen) und W die erwartete maximale Anzahl von Werten der Kanalimpulsantwort h darstellt. Die verbindungsindividuelle Mittambel m wird durch eine Rotation nach rechts des Grundmittambelcodes um W * m Chips und periodischer Dehnung bis L > (M + 1)* W - 1 Chips abgeleitet. Da der komplexe Grundmittambelcode von einem binären Mittambelcode durch Modulation mit $j^{q-1}$ abgeleitet wird, ist das Sendesignal der Mittambel m ebenfalls GMSK moduliert.

Empfangsseitig findet nach einer analogen Verarbeitung, d.h. Verstärkung, Filterung, Konvertierung ins Basisband, eine digitale Tiefpaßfilterung der Empfangssignale e in einen digitalen Tiefpaßfilter DLF statt. Ein Teil des Empfangssignals e, der durch einen Vektor em der Länge L = M * W repräsentiert wird und keine Interferenzen des Datenteils enthält, wird einem Kanalschätzer KS übermittelt. Die Kanalschätzung aller M Kanalimpulsantworten h wird gemäß

$$h = IDFT (DFT (em )g)$$

durchgeführt, mit

$$g = (DFT (sm ))^{-1}.$$

Die Datenschätzung im Joint Detection Datenschätzer DE wird für alle Verbindungen gemeinsam durchgeführt. Die Spreizcodes werden mit $c^{(k)}$ die Empfangsdaten mit $d^{(k)}$ und die korrespondierenden Kanalimpulsantworten mit $h^{(k)}$ repräsentiert, wobei $k = 1$ bis $K$ ist.

Der Teil des Empfangssignals der für die Datenschätzung benutzt wird, wird durch den Vektor

$$e=A\cdot d+n$$

beschrieben, wobei A die Systemmatrix mit den a-priori bekannten CDMA-Codes $c^{(k)}$ und den geschätzten Kanalimpulsantworten $h^{(k)}$ ist. Der Vektor d ist eine Kombination der Daten $d^{(k)}$ jedes Datenkanals gemäß folgender Gleichung:

$$d=[d_1^{(1)},d_1^{(2)},...d_I^{(K)}..d_N^{(1)}..d_N^{(K)}]$$

Für diese Symbolanordnung hat die Systemmatrix A eine Bandstruktur, die zur Reduzierung der Komplexität des Algorithmus genutzt wird. Der Vektor n enthält den Rauschanteil. Die Datenschätzung wird durch einen Zero Forcing Block Linear Equalizer (ZF-BLE) nach folgender Gleichung durchgeführt:

$$d=(A^{+T}A)^{-1}A^{+T}e.$$

Die Komponenten haben ein kontinuierlichen Wert und sind nicht manipulierte Schätzwerte der Datensymbole d. Um die Berechnung von d zu vereinfachen, kann das Problem in ein lineares Gleichungssystem der Form

$$(A^{*T}A)d= A^{*T}e$$

umgeschrieben werden, wobei nach einer Cholesky-Zerlegung

$$A^{*T}A = H^{*T}H$$

die Bestimmung der Datensymbole d auf das Lösen folgender zwei Systeme linearer Gleichungen

$$H^{*T}z=A^{*T}e \qquad \text{mit} \qquad H.d=z$$

reduziert wird. Die Lösung dieser Gleichungssysteme kann rekursiv durchgeführt werden. H ist eine obere Dreiecksmatrix und $H^{*T}$ ist eine untere Dreiecksmatrix.

Die hier beschriebene Datenschätzung ist für einen einzelnen Datenteil gültig. Weiterhin müssen bei der Datenschätzung die Interferenzen zwischen der Mittambel m und den Datenteilen berücksichtigt werden. Nach der Trennung der Datensymbole der Datenkanäle DK1 und DK2 findet eine Demodulation in einem Demodulator DMO, eine Entwürfelung in einem Deinterleaver DI und eine Kanaldecodierung in Faltungsdecodierer FD statt.

Sendeseitig und empfangsseitig wird die digitale Signalverarbeitung durch eine Steuereinrichtung SE gesteuert. Die Steuereinrichtung SE berücksichtigt insbesondere die Anzahl der Datenkanäle DK1, DK2 pro Verbindung, die Spreizcodes der Datenkanäle DK1, DK2, die aktuelle Funkblockstruktur und die Anforderungen an die Kanalschätzung.

Insbesondere wird durch die Steuereinrichtung SE die Überlagerung der Datensymbole d im Summierglied S beeinflußt. Damit kann die Gewichtung der Datensymbole verschiedener Datenkanäle DK1, DK2 eingestellt werden. Außer einer Gleichgewichtung können auch Datensymbole d einer ersten Kategorie (z.B. Signalisierungsinformationen) höher gewichtet werden. Durch die Steuereinrichtung SE wird ebenfall der Funkblockbildner BG gesteuert und somit die Energie pro Symbol eingestellt. Die Energie pro Symbol ist dabei in den Datenteilen und in der Mittambel m gleich. Unter bestimmten Verkehrsbedingungen kann auch eine höhere Gewichtung der Datenteile eingestellt werden.

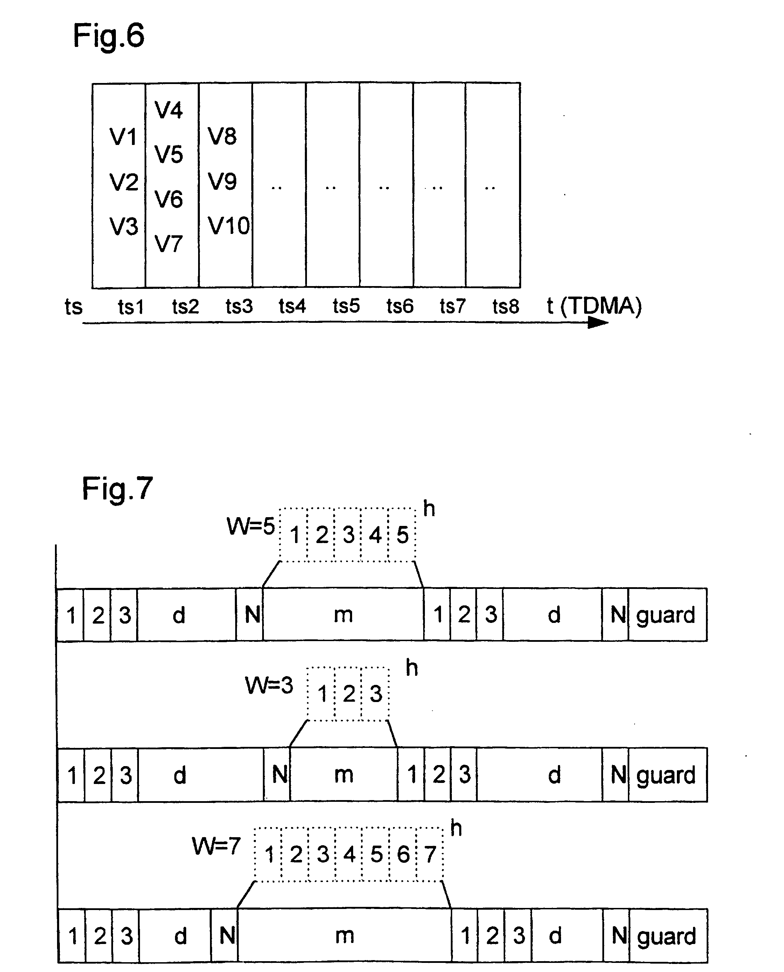

FIG 6 zeigt einen Rahmen der TDMA-Struktur der Funkschnittstelle. Die Zuteilung der Verbindungen V1 bis V10 zu einzelnen Zeitschlitzen ts1, ts 2, ts 3 wird netzseitig durchgeführt. Dabei ist zu berücksichtigen, daß pro Zeitschlitz ts nur eine begrenzte Anzahl von Kanalimpulsantworten h gemeinsam schätzbar ist. Diese Limitierung ergibt sich daraus, daß die Kanalimpulsantworten L Chips enthalten, die Kanalimpulsantworten zur genauen Kanalschätzung W Koeffizienten aufweisen und M die Anzahl der Verbindungen pro Zeitschlitz darstellt. Die Anzahl gemeinsam schätzbarer Kanalimpulsarten h ist dabei durch die Ungleichung L > M * W + W - 1 begrenzt.

Die Zuteilungsstrategie sieht daher vor, daß in jedem Zeitschitz ts in etwa eine gleiche Anzahl von Verbindungen übertragen wird. In zweiter Hinsicht kann die Anzahl der Datenkanäle pro Verbindung berücksichtigt werden, so daß beispielsweise im Zeitschlitz ts2, bei dem die Verbindungen V4 bis V7 weniger Datenkanäle pro Verbindungen haben, eine größere Anzahl von Verbindungen übertragen wird.

Durch die Nutzung einer gemeinsamen Mittambel m für mehrere Datenkanäle DK1 und DK2 ist es möglich in einem Zeitschlitz ts eine größere Anzahl von Datenkanälen DK1 und DK2 zu übertragen. Dies führt zu einer Erhöhung der Datenrate pro Zeitschlitz ts oder zu einer Verlängerung der schätzbaren Kanalimpulsantworten h (für komplizierte Geländestrukturen) in diesem Zeitschlitz ts.

Eine weitere Beeinflussung der Datenrate ist in FIG 7 gezeigt. Hierbei wird nicht von einer konstanten Funkblockstruktur ausgegangen, sondern eine Veränderung der Funkblockstruktur wird durch die Steuereinrichtung SE veranlaßt. Die Länge der Mittambel m kann den Geländebedingungen angepaßt werden. Bei komplizierten Geländebedingungen, z.B. im Hochgebirge oder in Fjorden, wird die Länge der Mittambel m auf Kosten der Datenteile verlängert. Bei einfachen Geländen, z.B. flachen Land kann die Mittambel m verkürzt werden. Die Definition der Funkblockstruktur geschieht vorteilhafterweise funkzellenabhängig. Es ist jedoch auch möglich, die Mittambellänge von Verbindung zu Verbindung individuell einzustellen, wobei dann vorteilhafterweise Verbindungen V1, V2, V3 einer Funkblockstruktur einem gemeinsamen Zeitschlitz ts1 zugeordnet werden.

Die Länge der Mittambel m korrespondiert dabei in etwa mit der Länge der zu schätzenden Kanalimpulsantwort h, d.h. bei einfachen Geländestrukturen ist die Kanalimpulsantwort kurz, z.B. W = 3, und bei komplizierten Geländebedingungen lang, z.B. W = 7.

Das in den Ausführungsbeispielen vorgestellte Mobilfunknetz mit einer Kombination von FDMA, TDMA und CDMA ist für Anforderungen an Systeme der 3. Generation geeignet. Insbesondere eignet es sich für eine Implementierung in bestehende GSM-Mobilfunknetze, für die ein nur geringer Änderungsaufwand nötig ist. Der Entwurf von Dual-Mode Mobilstationen MS, die sowohl nach dem GSM-Standard, als auch nach dem vorgestellten TD/CDMA Standard funktionieren, wird erleichtert.

Durch die Erhöhung der Datenraten pro Zeitschlitz, indem gemeinsame Mittambeln genutzt werden (channel pooling), ist es möglich, schrittweise variable Datenraten von beispielsweise K mal 13 kbit/s einzustellen.

**Patentansprüche**

1. Verfahren zur Datenübertragung über eine Funkschnittstelle in einem Funk-Kommunikationssystem, bei dem einer Verbindung über die Funkschnittstelle zumindest zwei Datenkanäle (DK1, DK2) zugeteilt sind, die Datenkanäle (DK1, DK2) durch einen individuellen Spreizkode unterscheidbar sind, **dadurch gekennzeichnet, daß** in einem Datenkanal (DK1, DK2) zusätzlich zu Datensymbolen (d) Mittambeln (m) mit bekannten Symbolen übertragen werden, für die Verbindung eine Anzahl (M) Mittambeln (m) verwendet wird, die kleiner als die Anzahl (k) von Datenkanälen (DK1, DK2) ist.

2. Verfahren nach Anspruch 1, bei dem für die Verbindung eine Mittambel (m) verwendet wird.

3. Verfahren nach einem der vorherigen Ansprüche, bei dem die Datensymbole (d) der zumindest zwei Datenkanäle (DK1, DK2) einer Verbindung beim Sender überlagert werden.

4. Verfahren nach Anspruch 3, bei dem die Datensymbole (d) mit gleicher Wichtung überlagert werden.

5. Verfahren nach Anspruch 3, bei dem die Datensymbole (d) einer ersten Kategorie mit einer höheren Wichtung als Datensymbole (d) einer zweiten Kategorie überlagert werden.

6. Verfahren nach einem der vorherigen Ansprüche, bei dem das Verhältnis der mittleren Leistung pro Symbol zwischen Mittambel (m) und den Datensymbolen (d) einstellbar ist.

7. Verfahren nach einem der vorherigen Ansprüche, bei dem empfangsseitig eine Auswertung der Mittambel (m) zur Kanalschätzung durchgeführt wird, wobei die Länge einer geschätzten Kanalimpulsantwort (h) einstellbar ist.

8. Verfahren nach einem der vorherigen Ansprüche, bei dem empfangsseitig eine Auswertung der Mittambel (m) zur Kanalschätzung durchgeführt wird, wobei die Länge der Mittambel (m) einstellbar ist.

9. Verfahren nach einem der vorherigen Ansprüche, bei dem die Datenkanäle (DK1, DK2, DK3) unterschiedliche Datenraten aufweisen.

10. Verfahren nach einem der vorherigen Ansprüche, bei dem die Funkschnittstelle zusätzlich eine TDMA-Komponente enthält, so daß in einem Zeitschlitz (ts) ein endlicher Funkblock bestehend aus Mittambel (m) und Datensymbolen (d) übertragen wird, und
eine Zuteilungsstrategie für Verbindungen zu einem Zeitschlitz (ts) sich an der Anzahl der zu schätzenden Mittambeln (m) pro Zeitschlitz orientiert.

11. Funkstation (MS, BTS) zur Datenübertragung in einem Funk-Kommunikationssystem über eine Funkschnittstelle, mit einem Steuereinrichtung (SE) zum Zuteilen von zumindest zwei Datenkanäle (DK1, DK2) zu einer Verbindung,

- wobei jeder Datenkanal (DK1, DK2) durch einen individuellen Spreizkode unterscheidbar ist, **dadurch gekennzeichnet, daß**

- in einem Datenkanal (DK1, DK2) zusätzlich zu Datensymbolen (d) Mittambeln (m) mit bekannten Symbolen übertragen werden,

mit einem Signalverarbeitungsmittel (DSP), das für die Verbindung eine Anzahl (M) Mittambeln (m) verwendet, die kleiner als die Anzahl (k) von Datenkanälen (DK1, DK2) ist.

## Claims

1. Method for data transmission via a radio interface in a radio communications system, in which
one connection via the radio interface is assigned at least two data channels (DK1, DK2),
the data channels (DK1, DK2) can be distinguished by an individual spread code, **characterized in that**
in addition to data symbols (d), interblock sequences (m) with known symbols are transmitted in a data channel (DK1, DK2), and a number (n) of interblock sequences (m) are used for the connection, this number being less than the number (k) of data channels (DK1, DK2).

2. Method according to Claim 1, in which one interblock sequence (m) is used for the connection.

3. Method according to one of the preceding claims, in which the data symbols (d) for the at least two data channels (DK1, DK2) of a connection are superimposed in the transmitter.

4. Method according to Claim 3, in which the data symbols (d) are superimposed with the same weighting.

5. Method according to Claim 3, in which the data symbols (d) in a first category are superimposed with a higher weighting than data symbols (d) in a second category.

6. Method according to one of the preceding claims, in which the ratio of the mean power per symbol between the interblock sequence (m) and the data symbols (d) is variable.

7. Method according to one of the preceding claims, in which an evaluation of the interblock sequence (m) is carried out for channel estimation at the receiving end, with the length of an estimated channel impulse response (h) being variable.

8. Method according to one of the preceding claims, in which an evaluation of the interblock sequence (m) is carried out for channel estimation at the receiving end, with the length of the interblock sequence (m) being variable.

9. Method according to one of the preceding claims, in which the data channels (DK1, DK2, DK3) have different data rates.

10. Method according to one of the preceding claims, in which the radio interface also includes a TDMA component, so that a finite burst comprising the interblock sequence (m) and data symbols (d) is transmitted in a time slot (ts), and
and one assignment strategy for connections to a time slot (ts) is based on the number of interblock sequences (m) to be estimated per time slot.

11. Radio station (MS, BTS) for data transmission in a radio communications system via a radio interface, having a control device (SE) for assignment of at least two data channels (DK1, DK2) to a connection,

- in which case each data channel (DK1, DK2) can be distinguished by an individual spread code, **characterized in that**
- in addition to data symbols (d), interblock sequences (m) with known symbols are transmitted in a data channel (DK1, DK2),

having a signal processing means (DSP) which uses a number (n) of interblock sequences (m) for the connection, this number being less than the number (k) of data channels (DK1, DK2).


**Revendications**

1. Procédé, destiné à la transmission de données par l'intermédiaire d'une interface radio dans un système de communication par radio,
dans lequel
au moins deux canaux de données (DK1, DK2) sont affectés à une liaison par l'intermédiaire de l'interface radio,
les canaux de données (DK1, DK2) peuvent être distingués par un code d'étalement individuel,
**caractérisé par le fait que,**
dans un canal de données (DK1, DK2), en plus de symboles de données (d), sont transmises des séquences intermédiaires de synchronisation ou "midambles" (m), ayant des symboles connus,
pour la liaison, on utilise une nombre (n) de séquences intermédiaires de synchronisation ou "midambles" (m), qui est inférieur au nombre (K) de canaux de données (DK1, DK2).

2. Procédé selon la revendication 1 dans lequel
on utilise, pour la liaison, une séquence intermédiaire de synchronisation ou "midamble" (m).

3. Procédé selon l'une des revendications précédentes dans lequel
les symboles de données (d) desdits au moins deux canaux de données (DK1, DK2) sont superposés à une liaison au niveau de l'émetteur.

4. Procédé selon la revendication 3 dans lequel
les symboles de données (d) sont superposés avec la même pondération.

5. Procédé selon la revendication 3 dans lequel
les symboles de données (d) d'une première catégorie sont superposés avec une pondération supérieure à celle de symboles de données (d) d'une deuxième catégorie.

6. Procédé selon l'une des revendications précédentes dans lequel
on peut régler le rapport de la puissance moyenne par symbole entre les séquences intermédiaires de synchronisation ou "midambles" (m) et les symboles de données (d).

7. Procédé selon l'une des revendications précédentes dans lequel
on procède, pour l'évaluation du canal, du côté réception, à une appréciation des séquences intermédiaires de synchronisation ou "midambles" (m) la longueur de la réponse impulsionnelle (h) du canal évaluée étant réglable.

8. Procédé selon l'une des revendications précédentes dans lequel
on procède, pour l'évaluation du canal, du côté réception, à une appréciation des séquences intermédiaires de synchronisation ou "midambles" (m) la longueur de la séquence intermédiaire de synchronisation ou "midamble" (m) étant réglable.

9. Procédé selon l'une des revendications précédentes dans lequel
les canaux de données (DK1, DK2, DK3) ont des débits binaires différents.

10. Procédé selon l'une des revendications précédentes dans lequel
l'interface radio a, en plus, une composante AMRT (ou, en anglais, TDMA) si bien que, dans un créneau temporel (ts), est transmis un bloc radio limité composé de séquences intermédiaires de synchronisation ou "midambles" (m) et de symboles de données (d) et
une stratégie d'affectation de liaisons à un créneau temporel (ts) s'oriente au nombre de séquences intermédiaires de synchronisation ou "midambles" (m) à apprécier par créneau temporel.

11. Station radio (MS, BTS), destinée à la transmission de données par l'intermédiaire d'une interface radio dans un système de communication par radio,
comportant un dispositif de commande (SE) destiné à l'affectation de, au moins, deux canaux de données (DK1, DK2) à une liaison,

- chaque canal de données (DK1, DK2) pouvant être distingué par un code d'étalement individuel

**caractérisée par le fait que,**

- dans un canal de données (DK1, DK2), en plus des symboles de données (d), sont transmises des séquences intermédiaires de synchronisation ou "midambles" (m) avec des symboles connus,

et comportant un moyen de traitement des signaux (DSP) qui utilise, pour la liaison, un nombre (n) de séquences intermédiaires de synchronisation ou "midambles" (m), qui est inférieur au nombre (K) de canaux de données (DK1, DK2).

## Fig.1

## Fig.2

E

B

ts    ts1   ts2   ts3   ts4   ts5   ts6   ts7   ts8   t (TDMA)

..

## Fig.3

| ← | Ts*N | → | ← | L*Tc | → | ← | Ts*N | → | ←Tg→ |

| 1 | 2 | 3 | d | N | m | 1 | 2 | 3 | d | N | guard |

| 1 | 2 | 3 | 4 | | L |

| 1 | 2 | 3 | 4 | code | Q |

→Tc←

→Tc←

← Ts=Q*Tc →

## Fig.4

SE

DSP

d → FC → I → MOD → SPR → S → BG → CIF →

DK1

DK2

d → FC → I → MOD → SPR → S

m ↑ (to BG)

## Fig.5

SE

DSP

e → DLF → KS → DE

DE → DMO → DI → FD → d

DE → DMO → DI → FD → d

## Fig.6

## Fig.7